# EUROPEAN PATENT SPECIFICATION

(11) **EP 3 189 118 B1**
(45) Date of publication and mention of the grant of the patent: **11.12.2019**
(21) Application number: 15750359.0
(22) Date of filing: 07.08.2015
(51) Int. Cl.: C09K 11/02, C09K 11/56, C09K 11/62, C09K 11/88

(54) **REACTIVE COLLOIDAL NANOCRYSTALS AND NANOCRYSTAL COMPOSITES**
REAKTIVE KOLLOIDALE NANOKRISTALLE UND NANOKRISTALLINE VERBUNDWERKSTOFFE
NANOCRISTAUX COLLOÏDAUX RÉACTIFS ET COMPOSITES NANOCRISTALLINS

(30) Priority: 11.08.2014 EP 14180543
(43) Date of publication of application: 12.07.2017
(73) Proprietor: Henkel AG & Co. KGaA, 40589 Düsseldorf (DE); Henkel IP & Holding GmbH, 40589 Düsseldorf (DE)
(72) Inventor: TORRES CANO, Elisabet, E-08022 Barcelona (ES); SALHI, Fouad, E-08193 Barcelona (ES); MINNAAR, Jozeph Leendert, NL-4328 Zeeland (NL); ALMARZA MARTINEZ, Albert, E-08027 Barcelona (ES); MORELL BEL, Mireia, E-17190 Salt (ES); MARIE, Camille, F-Cabourg 14390 (FR); CARRERAS, Paz, E-Barcelona 08029 (ES)
(74) Representative: González Peces, Gustavo Adolfo
(86) International application number: PCT/EP2015/068235
(87) International publication number: WO 2016/023821

(56) References cited:
- WO-A1-2013/057702
- US-A1- 2006 054 863
- US-A1- 2008 231 170
- US-A1- 2010 006 775

## Description

### Technical field

The present invention relates to reactive colloidal nanocrystals comprising a core comprising a semiconductive compound and at least one polythiol ligand, wherein said core is surrounded by at least one polythiol ligand. Furthermore, the present invention relates to nanocrystal composites. Reactive colloidal nanocrystals according to the present invention can be prepared with one pot synthesis and are ready to react directly with the polymer matrix and being crosslinked with the polymer matrix to form high quality and stable nanocrystal composites.

### Background of the invention

Physical mixing of nanocrystal (NC) solutions with a polymer solution or a crosslinking formulation is a common approach used in the art to obtain NC-polymer hybrid materials. As known, the most conventional organic stabilizing ligands of NCs consist of alkyl chain ligands e.g. octylamine or tri-octylphosphine oxide. Using this strategy chemical attacks to the surface of the NC are avoided e.g. normally caused by radicals during polymerization reactions. However, photoluminescence quantum yield (PL-QY) is often reduced by agglomeration of NCs because of the phase segregation processes. Moreover, due to the same problem the NC content is mostly around 0.1 wt.% to assure a good dispersion inside the matrix. The NC content level becomes a significant obstacle to achieve homogenous dispersions because hydrophobic outside ligands that are stabilizing the particles (octylamine or tri-octylphosphine oxide or oleic acid) are usually incompatible with many common polymer matrices.

In order to make the NCs more compatible with polymer matrices and to obtain more homogeneous dispersions, organic ligands can be exchanged with ligands having more polar groups e.g. amines, carboxylates or thiols. However, this approach leads to an increase in defects on the surface of the NC, which have a negative effect on the final properties e.g. photoluminescence (PL) and electroluminescence (EL).

Another approach is the in-situ synthesis of semiconductor NCs in the presence of polymers. In this approach typically, the preparation procedure is divided into two separate steps. In a first step, organometallic precursors for the NCs are introduced into polymer matrices by simple mixing. In a second step, the mixture of NC precursors and polymer is exposed to high temperatures with or without the presence of a gas or a chalcogenide solution. Since the infinite crystal growth is limited by the polymer matrix, only nanometer-sized semiconductor crystals are obtained i.e. average CdSe NCs have a size between 2 and 4 nm. Within this *in-situ* synthesis method, control over the size and shape of NCs cannot be achieved e.g. CdSe NCs are in the size range of 1 to 6 nm and the NC's photoluminescence is very low.

Yet, another approach is polymerization reaction in the presence of semiconductor NCs. In this approach, the direct polymerization of organic monomers in the presence of NCs is performed to form NC-polymer hybrid materials *in-situ.* However, with this strategy the chemical attack e.g. from radicals during polymerization reactions and the aggregation of NCs within the polymer are the main causes for photoluminescence quenching in hybrid materials.

Another conventional way to synthesize NCs is the synthesis using hydrophobic stabilizing ligands. However, this involves poor NCs dispersion in polymer matrices due to the incompatibility between ligands and matrices (e.g. polarity-solubility parameters, physico-chemical interactions) negatively affect the final properties of the resulting material. Up till now, to overcome this issue the approach has been to replace the ligands with more suitable ligands for the polymer matrix. In this way, the NCs dispersion inside the composites is enhanced.

US2008/231170 discloses a wavelength converter, comprising a plurality of wavelength conversion layers respectively containing, as phosphors, at least one type of semiconductor ultrafine particles having a mean particle size of not more than 20 nm and at least one type of fluorescent substance having a mean particle size of not less than 0.1 [mu]m in a resin matrix.

US2006/054863 discloses a composite scintillator having enhanced transparency for detecting ionizing radiation comprising a material having optical transparency wherein said material comprises nano-sized objects having a size in at least one dimension that is less than the wavelength of light emitted by said composite scintillator wherein said composite scintillator designed to have selected properties suitable for a particular application.

US2010/006775 discloses a solid-state lamp comprising: a light emitting diode providing an ultraviolet light output; a quantum dot phosphor receiving the ultraviolet light to emit a white light, the quantum dot phosphor comprising: (a) a quantum dot; (b) a capping layer surrounding the quantum dot; and (c) an activator material attached to the capping layer to be spaced from the quantum dot by the capping layer so as to promote phosphorescence with the quantum dot.

Therefore, there is still need for high loaded and well-dispersed nanocrystal composites (NC-composites) displaying stable and high luminescent properties.

### Short description of the figures

Figure 1 illustrates the structure of reactive colloidal NC according to the present invention.
Figure 2 illustrates the structure of the NC-composite according to the present invention.
Figure 3 illustrates TGA curves at 10 °C/min under N₂ atmosphere of commercial nanocrystals and reactive colloidal nanocrystals according to the present invention.
Figure 4 illustrates normalized QY evolution of the NC-composites of example 10 at 85°C.
Figure 5 illustrates normalized QY evolution of CdS-TEMPIC NC-composites under three different photon irradiances (example 11).

### Summary of the invention

The present invention relates to a reactive colloidal nanocrystal comprising a core comprising a semiconductive compound, wherein said semiconductive compound is a combination of elements selected from the group consisting of Zn, In, Cu, S and Se; and at least one polythiol ligand selected from the group consisting of primary thiols, secondary thiols and mixtures thereof, wherein said core is surrounded by at least one polythiol ligand, and wherein said reactive colloidal nanocrystal does not undergo a ligand exchange process, and only the original ligands present during the synthesis are attached.

In addition, the present invention relates to a process to prepare reactive colloidal nanocrystals according to the present invention.
The present invention also encompasses a nanocrystal composite comprising reactive colloidal nanocrystals according to the present invention and a polymer matrix, wherein said reactive colloidal nanocrystals are covalently linked with said polymer matrix.
In addition, the present invention relates to a process to prepare nanocrystal composites according to the present invention.

Furthermore, the present invention encompasses a product comprising a nanocrystal composite according to the present invention, wherein said product is selected from the group consisting a display device, a light emitting device, a photovoltaic cells, a photodetector, a energy converter device, a laser, sensors, a thermoelectric device, catalytic applications and security inks and biomedical applications.

Finally, the present invention encompasses, use of nanocrystal composite according to the present invention as a source of photoluminescence or electroluminescence.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous. In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

All references cited in the present specification are hereby incorporated by reference in their entirety.

Unless otherwise defined, all terms used in disclosing the invention, including technical and scientific terms, have the meaning as commonly understood by one of the ordinary skill in the art to which this invention belongs to. By means of further guidance, term definitions are included to better appreciate the teaching of the present invention.

The present invention relates to the reactive colloidal NCs, which are reactive and the preparation of them. Furthermore, the present invention relates to the NC-composites and to the preparation of the NC-composites using reactive colloidal nanocrystals as multifunctional crosslinkers. As a result, NCs surrounded by multifunctional ligands can be directly crosslinked with the polymer matrix. This enables the preservation of the inherent properties (e.g. photoluminescence or electroluminescence) of the nanocrystals. In this way, well-dispersed and homogeneous NC-composites can be easily prepared, and subsequently used in a wide range of applications.

By the term 'nanocrystal' is meant a nanometer-scale crystalline particle, which can comprise a core/shell structure and wherein a core comprises a first material and a shell comprises a second material, and wherein the shell is disposed over at least a portion of a surface of the core.

By the term 'ligand' is meant molecules having one or more chains that are used to stabilize nanocrystals. Ligands have at least one focal point where it binds to the nanocrystal, and at least one active site that either interacts with the surrounding environment, crosslinks with other active sites or both.

Using this strategy, NC-composites with adjustable physico-chemical properties can be prepared because of the available structural versatility of polythiol ligands, monomers and oligomers. In addition, changing the chemical composition of the reactive colloidal NCs, the application field can be expanded e.g. photoluminescence, electroluminescence, magnetism, thermoelectrics or ferroelectrics.

The present invention provides a reactive colloidal nanocrystal comprising a core comprising a metal or a semiconductive compound or a mixture thereof and at least one polythiol ligand, wherein said core is surrounded by at least one polythiol ligand.

Furthermore, the present invention provides a nanocrystal composite comprising reactive colloidal nanocrystals according to the present invention and a polymer matrix, wherein said reactive colloidal nanocrystals are covalently linked with said polymer matrix.

By the term reactive colloidal nanocrystals is meant solution-grown, nanometer-sized, inorganic particles that are stabilized by a layer of ligands that contain at least one functional group in the backbone that can be reacted preferably with the polymeric material to form a composite structure.

The present invention does not require a ligand exchange in the NCs in order to have a good compatibility with the polymer matrix. Due the functionality of the reactive colloidal NCs according to the present invention, they are chemically crosslinked with the polymer matrix, which leads to a good and homogenous dispersion inside the material.

The NCs described in the present invention do not undergo a ligand exchange process, which has been widely used in the prior art. Therefore, only the original ligands present during the synthesis are attached to the NCs. In contrast, NCs that undergo a ligand exchange process, have at least two type of ligands, the ligand attached during the synthesis and the ligand added during the ligand exchange. Studies have shown that after a ligand exchange process, part of the original ligand is still attached to the NC surface, see for example the paper of Knittel *et.al.* (Knittel, F. et al. On the Characterization of the Surface Chemistry of Quantum Dots. Nano Lett. 13, 5075-5078 (2013)).

Each of the essential components of the reactive colloidal nanocrystal and the nanocrystal composite according to the present invention are described in details below.

### Reactive colloidal nanocrystal

The present invention provides a reactive colloidal nanocrystal comprising a core comprising a semiconductive compound, wherein said semiconductive compound is a combination of elements selected from the group consisting of Zn, In, Cu, S and Se; and at least one polythiol ligand selected from the group consisting of primary thiols, secondary thiols and mixtures thereof, wherein said core is surrounded by at least one polythiol ligand, and wherein said reactive colloidal nanocrystal does not undergo a ligand exchange process, and only the original ligands present during the synthesis are attached.

### Core comprising a semiconductive compound

Core of the reactive colloidal nanocrystal according to present invention comprises semiconductive compounds. A semiconductive compound is combination of one or more of Zn, In, Cu, S and Se.

Optionally the core comprising the semiconductive compound may further comprise a dopant. Suitable examples of dopants to be used in the present invention are selected from the group consisting of Mn, Ag, Zn, Eu, S, P, Cu, Ce, Tb, Au, Pb, Sb, Sn, Tl and mixtures thereof.

In another preferred embodiment the core comprising a semiconductive compound is core comprising copper in combination with one or more compound selected from the group I and/or group II and/or group III and/or group IV and/or group V and/or group VI.

In another preferred embodiment core comprising copper is selected from the group consisting of CulnS, CuInSeS, CuZnlnSeS, CuZnlnS, Cu:ZnlnS, CuInS/ZnS, Cu:ZnlnS/ZnS, CuInSeS/ZnS, preferably selected from the group consisting of CuInS/ZnS, CuInSeS/ZnS, Cu:ZnlnS/ZnS.

The core of the nanocrystals according to the present invention has a structure including the core alone or the core and one or more shell(s) surrounding the core. Each shell may have structure comprising one or more layers, meaning that each shell may have monolayer or multilayer structure. Each layer may have a single composition or an alloy or concentration gradient.

In one embodiment, the core of the nanocrystal according to the present invention has a structure comprising a core and at least one monolayer or multilayer shell. Yet, in another embodiment, the core of the nanocrystal according to the present invention has a structure comprising a core and at least two monolayer and/or multilayer shells.

In one embodiment, the core of the nanocrystal according to the present invention has a structure comprising a core comprising copper and at least one monolayer or multilayer shell. Yet, in another embodiment, the core of the nanocrystal according to the present invention has a structure comprising a core comprising copper and at least two monolayer and/or multilayer shells.

Preferably, the size of the core of the reactive colloidal nanocrystals according to the present invention is less than 100 nm, more preferably less than 50, more preferably less than 10, however, preferably the core is larger than 1 nm.

Preferably the shape of the core of the reactive colloidal nanocrystal according to the present invention is spherical, rod or triangle shape.

### Polythiol ligand

A reactive colloidal nanocrystal according to present invention comprises at least one polythiol ligand selected from the group consisting of primary thiols, secondary thiols and mixtures thereof.

By the term polythiol is meant herein ligands having multiple thiol groups in the molecular structure. Furthermore, said polythiols used in the present invention have multiple functions (to act as a precursor, solvent and stabilizer), and therefore, can be considered as multifunctional polythiols. In other words the polythiol ligands used in the present invention are used as multifunctional reagents.

A polythiol ligand suitable to be used in the present invention has functionality from 2 to 20, preferably from 2 to 10 and more preferably from 2 to 8. Meaning that the polythiol ligand has from 2 to 20 thiol groups in the structure, preferably from 2 to 10, and more preferably from 2 to 8.

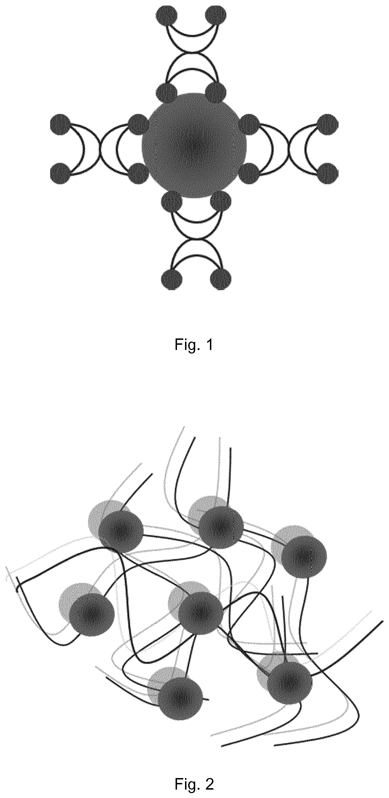

A reactive colloidal nanocrystal according to the present invention has a structure wherein the core is surrounded by at least one polythiol ligand. Figure 1 illustrates this structure in general level.

Suitable polythiol ligand to be used in the present invention is selected from the group consisting of primary thiols, secondary thiols and mixtures thereof. Preferably, polythiol ligand is selected from the group consisting of triglycol dithiol, 1,8-octanedithiol, pentaerythritol tetrakis (3-mercaptobutylate), pentaerythritol tetra-3-mercaptopropionate, trimethylolpropane tri(3-mercaptopropionate), tris[2-(3-mercaptopropionyloxy)ethyl]isocyanurate, dipentaerythritol hexakis(3-mercaptopropionate), ethoxilated-trimethylolpropan tri-3-mercaptopropionate, mercapto functional methylalkyl silicone polymer and mixtures thereof, preferably selected from the group consisting of tetra functionalized pentaerythritol tetrakis (3-mercaptobutylate), pentaerythritol tetra-3-mercaptopropionate, tris[2-(3-mercaptopropionyloxy)ethyl]isocyanurate and mixtures thereof.

Commercially available polythiol ligand for use in the present invention are for example KarenzMT™ PE1 from Showa Denko, GP-7200 from Genesee Polymers Corporation, PEMP from SC ORGANIC CHEMICAL CO. and THIOCURE® TEMPIC from BRUNO BOCK. Preferably, reactive colloidal NCs according to the present invention have a particle diameter (e.g. largest particle diameter) ranging from 1 nm to 100 nm, preferably from 1 nm to 50 nm and more preferably from 1 nm to 10 nm.

Reactive colloidal nanocrystals according to the present invention may comprise organic material and inorganic material in ratio between 2:1 and 75:1. Preferably, reactive colloidal nanocrystal according to the present invention may comprise inorganic material from 1 to 99% by weight based on the total weight of the reactive colloidal nanocrystal. Preferably, reactive colloidal nanocrystal according to the present invention may comprise organic material from 1 to 99% by weight based on the total weight of the reactive colloidal nanocrystal.

### Nanocrystal composites

A nanocrystal composite (NC-composite) according to the present invention comprises reactive colloidal nanocrystals according to the present invention and a polymer matrix, wherein said reactive colloidal nanocrystals are covalently linked with said polymer matrix. Suitable reactive colloidal nanocrystals and their compositions have been discussed above. A NC-composite according to the present invention comprises a polymer matrix which is formed from monomers and/or oligomers selected from the group consisting of acrylates, methacrylates, polyester acrylates, polyurethane acrylates, acrylamides, methacrylamides, maleimides, bismaleimides, alkene containing monomers and/or oligomers, alkyne containing monomers and/or oligomers, vinylether containing monomers and/or oligomers, epoxy containing monomers and/or oligomers, oxetane containing monomers and/or oligomers, aziridine containing monomers and/or oligomers, isocyanates, isothiocyanates and mixtures thereof, preferably said polymer matrix is formed from monomers and/or oligomers selected from the group consisting of acrylates, polyester acrylates, polyurethane acrylates and epoxy containing monomers and/or oligomers and mixtures thereof.

Commercially available monomers and/or oligomers to be used in the present invention are for example SR238 and CN117 from Sartomer, Epikote 828 from Hexion, OXTP from UBE and PLY1-7500 from NuSil.

A NC-composite according to the present invention comprises reactive colloidal nanocrystals from 0.01 to 99.99% by weight of the composite, preferably from 10 to 50%, and more preferably from 20 to 40%.

A NC-composite according to the present invention comprises polymer matrix from 0.01 to 99.99 % by weight of the composite, preferably from 50 to 90%, and more preferably from 60 to 80%.

Nanocrystal composite according to the present invention is solid at room temperature.

A NC-composite according to the present invention has reactive colloidal nanocrystals covalently crosslinked into the polymer matrix. Figure 2 illustrates the structure of the NC-composite according to the present invention. With this structure aggregation is avoided by the crosslinking reaction between the reactive colloidal NCs and the monomers/resins. NCs are solid and integral part of the network structure. This structure allows maintenance of the optical properties of the reactive colloidal NCs. Furthermore, this structure allows to achieve high loadings due to the high compatibility of the reactive colloidal NCs with the monomers/resins. Reactive colloidal NCs act as the crosslinking agents in the composite structure. In addition to above, the structure provides high thermal stability and moisture stability. The chemical incorporation of the reactive colloidal NCs provides them better protection against oxidation and/or other degradation processes.

The optical properties of the reactive colloidal NCs are preserved in the NC-composites according to the present invention. The NC-composites according to the present invention have improved stability, they have been found to be stable at least for the period of one month under specific conditions (accelerated ageing studies have been performed under 80°C and 80% R.H. during 30 days and the NC-composites are stable and optical properties are monitored to check their stability). The stability of NC-composites is also evaluated at room temperature under normal atmosphere. NC-composites according to the present invention are stable at least 6 months.

The present invention relates also on the preparation of the reactive colloidal nanocrystals in a one-pot synthesis using multifunctional reagents. This multifunctional reagent acts as precursor, solvent, ligand stabilizer and crosslinker. Above has been described suitable multifunctional reagents to be used in the present invention. As a result, reactive colloidal NCs surrounded with multifunctional ligands are formed, which can be directly crosslinked with the polymer matrix which enables the preservation of the inherent properties e.g. photoluminescence (PL) or electroluminescence (EL) of the NCs .

The reactive colloidal nanocrystals according to the present invention can be prepared in several ways of mixing all ingredients together.

In one preferred embodiment the preparation of the reactive colloidal nanocrystals comprises following step mixing at least one semiconductive compound or a mixture thereof and at least one polythiol ligand to form a reactive colloidal nanocrystal, wherein said reactive colloidal nanocrystals do not undergo a ligand exchange process; said semiconductive compound is a combination of elements selected from the group consisting of Zn, In, Cu, S and Se; and said at least one polythiol ligand is selected from the group consisting of primary thiols, secondary thiols and mixtures thereof.

In another preferred embodiment the preparation of the reactive colloidal nanocrystals comprises following steps 1) mixing at least one semiconductive compound with one or more element elected from group V and/or group VI and at least one polythiol ligand to form a reactive colloidal nanocrystal. Preferably, the metal is selected from the group consisting of Cu, Ag, Zn and In and the element is selected from the group consisting of Se and S.

In one preferred embodiment a process to prepare a reactive colloidal nanocrystals according to present invention comprises steps of 1) mixing copper with one or more element selected from group I and/or group II and/or group III and/or group IV and/or group V and/or group VI and at least one polythiol ligand to form a reactive colloidal nanocrystal. Preferably, the element is selected from the group consisting of In, Se, S and Zn.

The present invention also focuses on the preparation of nanocrystal composites using reactive colloidal nanocrystals according to the present invention, which are reactive as crosslinkers. In this way, well-dispersed, homogeneous and stable NC-composites can be easily prepared, and therefore, used in a wide range of applications. Moreover, using the preparation process according to the present invention the optical performance (PL-QY) of the NC-composites is enhanced on gradually increasing reactive colloidal NC loading. In addition the present invention allows the use of very high reactive colloidal NC loadings e.g. 50 wt.% covalently bonded with the polymer matrix.

The nanocrystal composites according to the present invention can be prepared in several ways of mixing all ingredients together.

In one embodiment the preparation of the nanocrystal composites according to the present invention comprises following steps:
1) adding reactive colloidal nanocrystals according to the present invention;
2) adding monomers and/or oligomers to form the polymer matrix and mixing;
3) curing with UV light and/or electron beam and/or temperature.

The preparation of the NC-composites according to the present invention can be prepared in one-pot reaction, meaning that the NC-composite can be prepared in the same pot in a subsequent reaction after the reactive colloidal NCs have been synthesised from the starting material.

The preparation process according to the present invention involves one step instead of two steps in case of embedding the hydrophobic NCs directly into the polymer matrix or three steps when a ligand exchange process is involved.

The preparation process according to the present invention does not involve any additional solvent and preferably does not involve the use of heavy metals.

The NC-composites according to the present invention can be used in a broad range of application by just changing the chemical composition of the core of the reactive colloidal NCs.

For example reactive colloidal NC - CulnS is suitable for display applications; PbS is suitable for solar cells; CuZnSnS is suitable for solar cells; CuFeSbS is suitable for thermoelectric applications; and FeSeS is suitable for magnetic applications.

The present invention also encompasses a product comprising a nanocrystal composite according to the present invention, the product can be selected from the group consisting of a display device, a light emitting device, a photovoltaic cell, a photodetector, an energy converter device, a laser, a sensor, a thermoelectric device, a security ink or in catalytic or biomedical applications (e.g. targeting, imaging). In preferred embodiment products are selected from the group consisting of display, lighting and solar cells.

The present invention also relates to use of nanocrystal composite according to the present invention as a source of photoluminescence or electroluminescence.

### Examples

### Example 1

### CulnSeS-Pentaerythritol tetrakis (3-mercaptobutylate) (KarenzMT™ PE1) NCs in an Epoxy-Acrylate matrix

0.65 g of (CuInSeS-KarenzMT™ PE1) (26 wt.%), 0.65 g of KarenzMT™ PE1 (26 wt.%), 0.35 g of diglycidylether of bisphenol A (14 wt.%), 0.85 g of 1,6-hexanediol diacrylate (SR238) (34 wt.%), 0.0025 g of triethylamine (Et₃N) (0.1 phr) and 0.025 g of 2-hydroxy-2-methyl-1-phenyl-propan-1-one (Darocur 1173) (1 phr) are mixed in a conditioning mixer for 2 minutes at 2000 rpm. Subsequently, the mixture is dispensed using a 1 ml plastic pipette into a Teflon mold (10x2x25 mm) and photocured by exposing to UV radiation of 70 mW·cm² (UV-A dose) intensity during 30 seconds. Finally, the sample is post-cured at 120°C during 45 minutes. A reddish emitting semiconductor NC-composite is obtained. PL-QY: 23.4%

### Functionalized NCs synthesis:

1.5 g of Cul, 7.5 g of In(OAc)₃ and 3 ml of DPPSe stock solution are dissolved in 30 g KarenzMT™ PE1. The mixture is heated at 200°C for 5 minutes and subsequently cooled down to room temperature (about 25 °C). Reddish reactive colloidal semiconductor NCs (CuInSeS-KarenzMT™ PE1) are obtained.

### Example 2

### CuInSeS/ZnS-Pentaerythritol tetrakis (3-mercaptobutylate) (KarenzMT™ PE1) NCs in an Acrylate matrix

1.25 g of (CuInSeS/ZnS-KarenzMT™ PE1) (50 wt.%), 1.25 g of epoxy oligomer acrylate (CN117) (50 wt.%) and 0.05 g of 2-hydroxy-2-methyl-1-phenyl-propan-1-one (Darocur 1173) (2 phr) are mixed in a conditioning mixer for 2 minutes at 2000 rpm. Subsequently, the mixture is dispensed using a 1 ml plastic pipette into a Teflon mold (10x2x25 mm) and photocured by exposing to UV radiation of 120 mW·cm² (UV-A dose) intensity during 60 seconds. Afterwards, the sample is post-cured at 120°C during 45 minutes. A reddish emitting semiconductor NC-composite is obtained. PL-QY: 22.4%

### Functionalized NCs synthesis:

1.5 g of Cul, 7,5 g of In(OAc)₃ and 3 ml of DPPSe stock solution are dissolved in 30 g KarenzMT™ PE1. The mixture is heated at 200°C for 5 minutes and subsequently cooled down to room temperature. 1 ml from this solution is dissolved in 4 ml KarenzMT™ PE1 and heated at 200°C. A mixture of 0.25 g ZnSt₂ and 0.4 ml TOPS stock solution is dissolved in 5.0 g KarenzMT™ PE1 is injected into the core solution over 15 minutes. Reddish reactive colloidal semiconductor NCs (CuInSeS/ZnS-KarenzMT™ PE1) are obtained.

### Example 3

### CuInS/ZnS/ZnS-Pentaerythritol tetrakis (3-mercaptobutylate) (KarenzMT™ PE1) NCs in a Vinylcarbosiloxane matrix

0.5 g of (CuInS/ZnS/ZnS-KarenzMT™ PE1) (20 wt.%), 2 g of vinylcarbosiloxane resin (80 wt.%) and 0.05 g of 2-hydroxy-2-methyl-1-phenyl-propan-1-one (Darocur 1173) (2 phr) are mixed in a conditioning mixer for 6 minutes at 2500 rpm. Subsequently, the mixture is dispensed using a 1 ml plastic pipette into a Teflon mold (10x2x25 mm) and photocured by exposing to UV radiation of 120 mW·cm² (UV-A dose) intensity during 60 seconds. Finally, the sample is post-cured at 120°C during 45 minutes. A reddish emitting semiconductor NC-composite is obtained.

### Functionalized NCs synthesis:

0.24 g of Cul, 1.46 g of In(OAc)₃ are dissolved in 50 ml KarenzMT™ PE1. The mixture is heated at 230°C for 10 minutes. A mixture of 1.7 g of Zn(OAc)₂·2H₂O in 25 ml KarenzMT™ PE1 is added to the core solution and the mixture is heated at 230°C for 45 minutes. Subsequently, a mixture of 1.7 g of ZnSt₂ in 25 ml KarenzMT™ PE1 is added to the core/shell solution and heated at 230°C for 45 minutes. The mixture is allowed to cool down to RT. 25 g of this NC mixture is mixed with 25 ml KarenzMT™ PE1 and subsequently centrifuged at 4000 rpm for 10 minutes. After decanting red reactive colloidal semiconductor NCs (CuInS/ZnS/ZnS-KarenzMT™ PE1) are obtained.

### Example 4

### Cu doped ZnInS/ZnS/ZnS NCs-Tris[2-(3-mercaptopropionyloxy)ethyl]iso-cyanurate (TEMPIC) NCs in an Acrylate matrix

0.30 g of (Cu:ZnlnS/ZnS/ZnS-TEMPIC) (12 wt.%), 0.95 g of TEMPIC (38 wt.%), 1.25 g of epoxy oligomer acrylate (CN117) (50 wt.%) and 0.05 g of 2-hydroxy-2-methyl-1-phenyl-propan-1-one (Darocur 1173) (2 phr) are mixed in a conditioning mixer for 2 minutes at 2000 rpm. Subsequently, the mixture is dispensed using a 1 mL plastic pipette into a Teflon mold (10x2x25 mm) and photocured by exposing to UV radiation of 70 mW·cm² (UV-A dose) intensity during 90 seconds. Afterwards, the sample is post-cured at 120°C during 45 minutes. A greenish emitting semiconductor NC-composite is obtained. PL-QY: 58.5%

### Functionalized NCs synthesis:

0.01 g of Cul, 0.3 g of Zn(OAc)₂·2H₂O, 0.2 g of In(OAc)₃ are dissolved in 10 ml TEMPIC. The mixture is heated at 220°C for 10 minutes. A mixture of 0.6 g of Zn(OAc)₂·2H₂O in 5 ml TEMPIC is added to the core solution and the mixture is heated at 240°C for 60 minutes. Then a mixture of 0.6 g of ZnSt₂ in 5 ml TEMPIC is added to the core/shell solution and heated at 240°C for 30 minutes. Greenish reactive colloidal semiconductor NCs (Cu:ZnlnS/ZnS/ZnS-TEMPIC) are obtained.

### Example 5

### CulnSeS-Pentaerythritol tetrakis (3-mercaptobutylate) (KarenzMT™ PE1) NCs in an Oxetane/Anhydride matrix

In an aluminum cup a mixture is prepared by adding the required amount of 1,2,4-benzenetricarboxylic anhydride (TMAn) (i.e. 1.3 g, 34 wt.%) and 0.8 g (i.e. 20 wt.% in respect to TMAn/OXTP amount) of KarenzMT™-PE1-functionalized CuInSeS NCs. The mixture is then introduced at 170°C until the anhydride is completely dissolved into the thiol-NCs. In another aluminum cup, 1,4-benzenedicarboxylic acid, bis((3-ethyl-3-oxetanyl)methyl) (OXTP) (i.e. 2.5 g, 66 wt.%) is introduced. Since the melting temperature is nearly 30°C, so at 170°C it becomes immediately liquid. OXTP is added on the TMAn/thiol-NCs mixture and the final formulation is mixed and subsequently cured at the same temperature during 4 hours. A reddish emitting semiconductor NC-composite is obtained.

### Functionalized NCs synthesis:

1.5 g of Cul, 7.5 g of In(OAc)₃ and 3 ml of DPPSe stock solution are dissolved in 30 g KarenzMT™ PE1. The mixture is heated till 200°C for 5 minutes and subsequently cooled down to room temperature (about 25°C). Reddish reactive colloidal semiconductor NCs (CuInSeS-KarenzMT™ PE1) are obtained.

### Example 6

### CuInS/ZnS/ZnS NCs-Mercapto functional silicone fluid (GP-7200) NCs in a Silicone matrix

2 g of (CuInS/ZnS/ZnS-GP7200) (40 wt.%), 1 g of thiol-functionalized dimethyl silicone copolymer (GP-367 from Genesse Polymers Corporation, 20 wt.%), 1 g of vinylcarbosiloxane resin (20 wt.%), 1 g of vinyl-terminated polydimethylsiloxane (PLY1-7500 from NuSil, 20 wt.%) and 0.1 g of 2-hydroxy-2-methyl-1-phenyl-propan-1-one (Darocur 1173) (2 phr) are mixed in a conditioning mixer for 2 minutes at 3000 rpm. Next, the mixture is dispensed using a 1 ml plastic pipette into a Teflon mold (10x2x25 mm) and photocured by exposing to UV radiation of 120 mW·cm² (UV-A dose) intensity during 30 seconds. Afterwards, the sample is post-cured at 120°C during 45 minutes. An orange emitting semiconductor NC-composite is obtained.

### Functionalized NCs synthesis:

0.24 g of Cul, 1.46 g of In(OAc)₃ are dissolved in 50 ml GP-7200 (mercapto functional methylalkyl silicone polymer from Genesse Polymer Corporation). The mixture is heated till 230°C for 10 minutes. A mixture of 1.7 g of Zn(OAc)₂·2H₂O in 25 ml GP-7200 is added to the core solution and the mixture is heated at 230°C for 45 minutes. Subsequently, a mixture of 1.7 g of ZnSt₂ in 25 ml GP-7200 added to the core/shell solution and heated at 230°C for 45 minutes. The mixture is allowed to cool down to RT. 25 g of this NC mixture is mixed with 25 ml GP-7200 and subsequently centrifuged at 4000 rpm for 10 minutes. After decanting orange reactive colloidal semiconductor NCs (CuInS/ZnS/ZnS-GP7200) are obtained.

### Example 7

Comparative study between NC-composites prepared using the approach disclosed and used in the prior art and the preparation method according to the present invention. Effect of the NC concentration on the optical performance of NC-composites is evaluated.

The preparation of NC-composites based on CdSe/CdS nanorods into a crosslinked acrylate or cellulose triacetate matrices have been published in Belstein J. Nanotechnol. 2010, 1, 94-100*.* This method has been used to prepare comparative NC examples. The best results in terms of optical performance were obtained using the acrylate matrix. In table 1, the effect of the NC concentration on the photoluminescence quantum yield (PL-QY) can be observed.

**Table 1. PL-QY of P(LMA-co-EGDM) composites using CdSe/CdS nanorods surrounded with hydrophobic ligands.**

| **NC concentration (wt.%)** | **PL-QY NC-composite^{a} (%)** |
|---|---|
| 0.008 | 63 |
| 0.03 | 52 |
| 0.05 | 49 |
| 0.10 | 40 |
| 0.16 | 43 |
| 0.32 | 37 |

| | |
|---|---|
| a. PL-QY was measured with a Hamamatsu absolute PL quantum yield measurement system C9920-02 at R.T. and using 395 nm as excitation wavelength. | |

Used Cd-based NCs are famous for their high luminescent behavior but also the high toxicity. These NCs were surrounded with hydrophobic ligands, thus, the nanocrystals were embedded into the polymer matrix as an additive. There was no chemical reaction between the NCs and the polymer matrix. As it can be seen from the table 1, PL-QY decreased by increasing the percentage of NCs. This behavior was explained due to the reabsorption of the emitted photons by other NCs, which caused PL quenching.

A similar system was reproduced by the Applicant to confirm this behavior. In this case, commercial hydrophobic-capped CdSe/ZnS nanocrystals were introduced into a photocrosslinked polyester acrylate matrix. As in the previous system, the NCs could not be covalently linked to the polymer matrix. The PL-QY data obtained by increasing the NC loading is shown in table 2. In this case, low percentages of NCs showed very low emission which was impossible to detect by the instrument used in the experiment. Only the material with the highest concentration could be measured, however, the PL-QY was very low (i.e. 0.4%). Taking into account that the NCs were based on Cd, the initial PL-QY in liquid was relatively high (e.g. 30%). However, once the NCs were introduced into the composite the luminescent properties of the NCs were almost lost. Moreover, the loading could not be increased above 0.05 wt.% due to the incompatibility between the hydrophobic NCs and the acrylate-based monomers.

**Table 2. PL-QY of polyester acrylate-based composites using CdSe/ZnS nanocrystals surrounded with hydrophobic ligands.**

| **NC concentration (wt.%)** | **PL-QY NC-composite^{a} (%)** |
|---|---|
| 0.01 | Below detection limit |
| 0.02 | Below detection limit |
| 0.05 | 0.4 |

| | |
|---|---|
| a. PL-QY was measured with a Jobin-Yvon Horiba Fluorolog 3 equipped with an integrating sphere at R.T. and using 460 nm as excitation wavelength. | |

Using the one pot synthesis according to the present invention to prepare Cd-free reactive colloidal NCs, the behavior was totally different. It was observed that on increasing the NC percentage the PL-QY increased (see table 3). A maximum was achieved at 37.5 wt.%. This trend has never been observed before and can be explained due to several factors: excellent compatibility of the NC-ligand and the monomers used to crosslink, chemical incorporation of the NCs inside the crosslinked matrix and excellent dispersion of the NCs inside the composite.

**Table 3. PL-QY of epoxy acrylate-based composites using thiol-functionalized CuInSeS/ZnS nanocrystals according to the present invention.**

| **Reactive colloidal NC concentration (wt.%)** | **PL-QY NC-composite^{a} (%)** |
|---|---|
| 5 | 9.8 |
| 10 | 15.0 |
| 12.5 | 14.4 |
| 25 | 17.9 |
| 37.5 | 22.4 |
| 50 | 20.2 |

| | |
|---|---|
| a. PL-QY was measured with a Hamamatsu absolute PL quantum yield measurement system C9920-02 at R.T. and using 460 nm as excitation wavelength. | |

### Example 8

Comparative thermal stability data regarding TGA of nanocrystals - commercial NCs vs. reactive colloidal NCs according to the present invention.

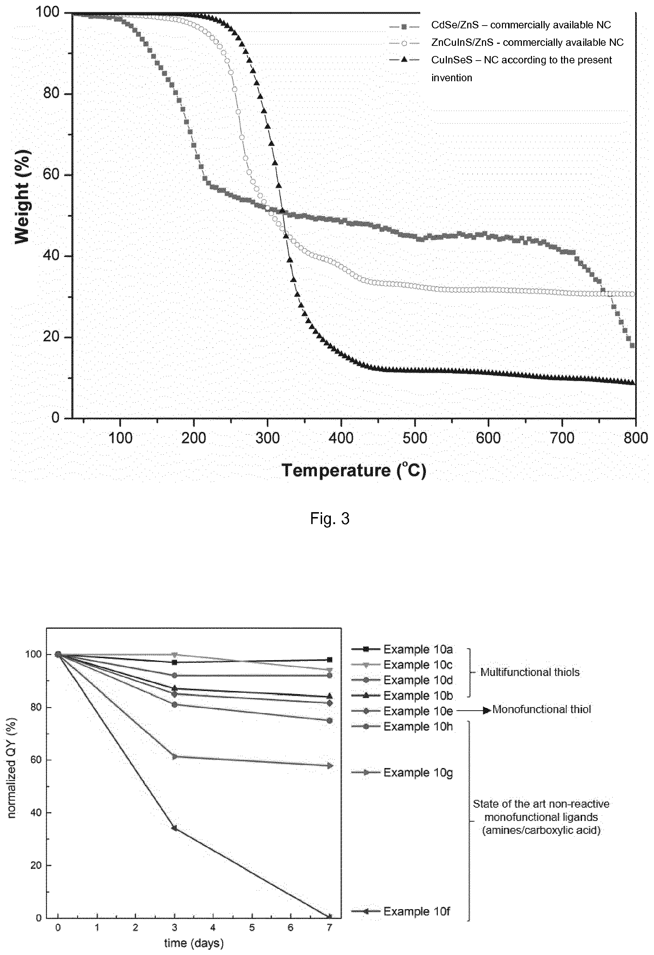

Figure 3 illustrates TGA curves at 10 °C/min under N₂ atmosphere of commercial and reactive colloidal nanocrystals according to the present invention. From the figure 3 can be seen that the Cu-based reactive colloidal nanocrystals (NC) according to the present invention exhibit the highest thermal stability with an onset of degradation above 200°C. Comparatively, the thermal stability of the commercial Cu-based ones is slightly lower (i.e. 188°C). Nevertheless, they are still outperforming the commercial Cd-based NCs which show the lowest onset of degradation below 100°C.

**Table 4 Comparative thermogravimetric data between commercial Cd and Cu-based NCs and Cu-based reactive colloidal NCs according to the present invention.**

| **Sample description** | **Tₒₙₛₑₜ^{a} (°C)** |
|---|---|
| Commercial Cd-based NCs (CdSe/ZnS) | 99 |
| Commercial Cu-based NCs (ZnCuInS/ZnS) | 188 |
| CuInSeS reactive colloidal NCs according to the present invention (polythiol ligand is KarenzMT™ PE1) | 233 |

| | |
|---|---|
| a. Temperature taken at 2 wt.% of loss weight. CdSe/ZnS NCs under the trade name CANdots Series A is from CAN GmbH, and ZnCuInS/ZnS NCs is from EMFUTURE. | |

### Example 9

HTA data regarding conventional NC-composites vs. NC-composites according to the present invention.

Moisture-thermal accelerated ageing was conducted on NC-composites prepared using the conventional technology (i.e. passive nanocrystal embedment) and technology according to the present invention (i.e. direct nanocrystal crosslinking). The conditions of the experiment were: 80°C and 80% relative humidity. The study was performed during 4 weeks, without interruption.

During the accelerated ageing some variables were followed. Firstly, the photoluminescent quantum yield (i.e. PL-QY) was monitored (see table 5).

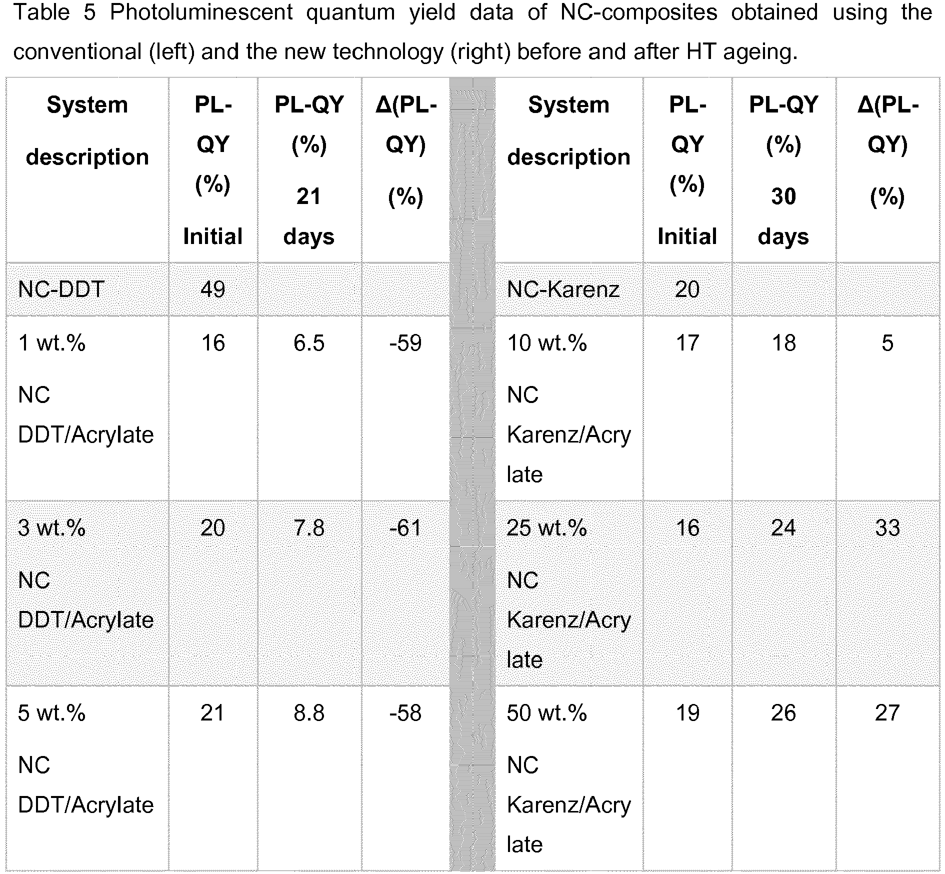

Comparing both technologies it is possible to observe that after HT ageing the optical behavior is different. In case of those NC-composites prepared through direct nanocrystal crosslinking the difference in PL-QY (i.e. before and after ageing) is never negative. These results indicate the high stability of these materials once exposed at high temperatures and moisture. On the contrary, those materials prepared by passive embedment seemed to be highly affected by both variables since PL-QY measured after the ageing process is much lower than the initial values.

As a conclusion, the material and synthesis procedure according to the present invention lead to obtain NC-composites with a higher moisture-thermal stability than those ones prepared using the conventional technology.

### Example 10

### Thermal stability of the reactive NC composites compared to state of the art non-reactive NC composite

The synthesis of the NCs and formulation of the NC-composites used in example 10 will be described below. All the synthetic procedure and testing was done under air conditions and no extra protection was applied to the NC-composites unless specified.

### Example 10a

### CuInS/ZnS - pentaerythriol tetrakis (3-mercaptopropionate) (PEMP) NCs in an acrylate matrix

0.24 g of Cul and 1.46 g of In(OAc)₃ were dissolved in 50 ml PEMP. The mixture was heated at 230 °C for 10 minutes. A mixture of 1.7 g of ZnSt₂ in 25 ml PEMP was added to the core solution, and the mixture was heated at 230 °C for 30 minutes. The mixture was allowed to cool down to room temperature. Red reactive colloidal semiconductor NCs (CuInS/ZnS-PEMP) were obtained.

### Synthesis of NC-composite in an acrylate matrix

0.5 g of (CuInS/ZnS-PEMP) (25 wt.%), 0.5 g of PEMP (25 wt.%), 0.9 g of Sartomer CN2025 (45 wt.%), 0.1 g of triethylene glycol dimethacryalte (5 wt.%) and 0.05 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW/cm² (UV-A dose) for 60 seconds. Subsequantly, the sample was post-cured at 90 °C for 2 hours. A reddish emitting semiconductor NC-composite was obtained.

### Example 10b

### CuInS/ZnS - pentaerythritol tetrakis (3-mercaptobutylate) (KarenzMT™ PE1) NCs in an acrylate matrix

0.24 g of Cul, 1.46 g of In(OAc)₃ were dissolved in 50 ml KarenzMT™ PE1. The mixture was heated at 230 °C for 10 minutes. A mixture of 1.7 g of ZnSt₂ in 25 ml KarenzMT™ PE1 was added to the core solution and the mixture was heated at 230 °C for 30 minutes. The mixture was allowed to cool down to room temperature. Red reactive colloidal semiconductor NCs (CuInS/ZnS-KarenzMT™ PE1) were obtained.

### Synthesis of NC-composite in an acrylate matrix:

0.5 g of (CuInS/ZnS-KarenzMT™ PE1) (25 wt.%), 0.5 g of KarenzMT™ PE1 (25 wt.%), 0.9 g of Sartomer CN2025 (45 wt.%), 0.1 g of triethylene glycol dimethacryalte (5 wt.%) and 0.05 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW/cm² (UV-A dose) for 60 seconds. Subsequently, the sample was post-cured at 90 °C for 2 hours. A reddish emitting semiconductor NC-composite was obtained.

### Example 10c

### CuInS/ZnS-tris(2-(mercaptopropionyloxy)ethyl)isocyanurate (TEMPIC) NCs in an acrylate matrix

0.24 g of Cul, 1.46 g of In(OAc)₃ were dissolved in 50 ml TEMPIC. The mixture was heated at 230 °C for 10 minutes. A mixture of 1.7 g of ZnSt₂ in 25 ml TEMPIC was added to the core solution and the mixture was heated at 230 °C for 30 minutes. The mixture was allowed to cool down to room temperature. Red reactive colloidal semiconductor NCs (CuInS/ZnS-TEMPIC) were obtained.

### Synthesis of NC-composite in an acrylate matrix:

0.5 g of (CuInS/ZnS-TEMPIC) (25 wt.%), 0.5 g of TEMPIC (25 wt.%), 0.9 g of Sartomer CN2025 (45 wt.%), 0.1 g of triethylene glycol dimethacryalte (5 wt.%) and 0.05 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW/cm² (UV-A dose) for 60 seconds. Subsequently, the sample was post-cured at 90 °C for 2 hours. A reddish emitting semiconductor NC-composite was obtained.

### Example 10d

### CdS-tris(2-(mercaptopropionyloxy)ethyl)isocyanurate (TEMPIC) NCs in an acrylate matrix

0.1 g of CdO was added to 5 g of TEMPIC. The mixture was heated at 250 °C for 30 minutes. The mixture was allowed to cool down to room temperature. Reactive colloidal semiconductor NCs (CdS-TEMPIC) were obtained. No shell was grown on these nanocrystals.

### NC-composite in an acrylate matrix synthesis:

1.0 g of (CdS-TEMPIC) (50 wt.%), 0.9 g of Sartomer CN2025 (45 wt.%), 0.1 g of triethylene glycol dimethacryalte (5 wt.%) and 0.05 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW/cm² (UV-A dose) for 60 seconds. Afterwards, the sample was post-cured at 90°C for 2 hours. An emitting semiconductor NC-composite was obtained.

### Example 10e

### CuInS/ZnS - 1-dodecanethiol (DDT) NCs in an acrylate matrix

0.24 g of Cul, 1.46 g of In(OAc)₃ were dissolved in 50 ml DDT. The mixture was heated at 230 °C for 10 minutes. A mixture of 1.7 g of ZnSt₂ in 25 ml DDT was added to the core solution and the mixture was heated at 230 °C for 30 minutes. The mixture was allowed to cool down to room temperature. Orange reactive colloidal semiconductor NCs (CuInS/ZnS-DDT) were obtained.

### Synthesis of NC-composite in an acrylate matrix:

0.2 g of (CuInS/ZnS-DDT) (10 *wt.%),* 0.8 g of KarenzMT™ PE1 (40 wt.%), 0.9 g of Sartomer CN2025 (45 wt.%), 0.1 g of triethylene glycol dimethacryalte (5 wt.%) and 0.05 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW/cm² (UV-A dose) intensity for 60 seconds. Subsequently, the sample was post-cured at 90 °C for 2 hours. An orange emitting semiconductor NC-composite was obtained.

### Example 10f

### CdSe/ZnS - hexadecylamine (HDA) and trioctylphophine-oxide (TOPO) NCs in an acrylate matrix

NCs acquisition: to compare, CdSe/ZnS-HDA,TOPO NCs dispersed in toluene were purchased from CAN Hamburg.

### Synthesis of NC-composite in an acrylate matrix:

0.002 g of (CdSe-HAD, TOPO) (0.1 wt.%), 1.0 g of KarenzMT™ PE1 (50 wt.%), 0.9 g of Sartomer CN2025 (45 wt.%), 0.1 g of triethylene glycol dimethacryalte (5 wt.%) and 0.05 g of 2-hydroxy-2-methyl-1-phenyl-propan-1-one (Darocur 1173) (2 phr) were mixed in a conditioning mixer for 2 minutes at 2000 rpm. Subsequently, the mixture is dispensed using a 3 ml plastic pipette into an aluminum cup and photocured by exposing to UV radiation of 120 mW/cm² (UV-A dose) intensity for 60 seconds. Subsequently, the sample was post-cured at 90 °C for 2 hours. A reddish emitting semiconductor NC-composite is obtained.

### Example 10g

### CdSeS/ZnS - oleicacid (OA) NCs in an acrylate matrix

NCs acquisition: to compare, CdSeS/ZnS-OA NCs dispersed in toluene were purchased from Sigma Aldrich.

### Synthesis of NC-composite in an acrylate matrix:

0.002 g of (CdSeS/ZnS-OA) (0.1 wt.%), 1.0 g of KarenzMT™ PE1 (50 wt.%), 0.9 g of Sartomer CN2025 (45 wt.%), 0.1 g of triethylene glycol dimethacryalte (5 wt.%) and 0.05 g of 2-hydroxy-2-methyl-1-phenyl-propan-1-one (Darocur 1173) (2 phr) were mixed in a conditioning mixer for 2 minutes at 2000 rpm. Subsequently, the mixture is dispensed using a 3 ml plastic pipette into an aluminum cup and photocured by exposing to UV radiation of 120 mW/cm² (UV-A dose) intensity for 60 seconds. Subsequantly, the sample was post-cured at 90 °C for 2 hours. A reddish emitting semiconductor NC-composite was obtained.

### Example 10h

### InP/ZnS - oleylamine (OLA) NCs in an acrylate matrix

NCs acquisition: to compare, InP/ZnS-OLA nanocrystals dispersed in toluene were purchased from Sigma Aldrich.

### Synthesis of NC-composite in an acrylate matrix:

0.002 g of (InP/ZnS-OLA) (0.1 wt.%), 1.0 g of KarenzMT™ PE1 (50 wt.%), 0.9 g of Sartomer CN2025 (45 wt.%), 0.1 gr of triethylene glycol dimethacryalte (5 wt.%) and 0.05 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW/cm² (UV-A dose) intensity for 60 seconds. Subsequently, the sample was post-cured at 90°C for 2 hours. A reddish emitting semiconductor NC-composite was obtained.

The NC-composites described above were aged in a box oven at 85 °C for 7 days. As detailed, all the NCs were hosted in the same polymer matrix. The QY of the NC-composites was normalized to its initial QY value. The evolution of the normalized QY was tracked for 7 days as shown in Figure 4.

It can be observed that the NC-composites containing NCs growth in polythiol ligands (CuInS/ZnS-PEMP; CuInS/ZnS-TEMPIC; CdS-TEMPIC; CuInS/ZnS-KarenzMT PE1) have a better thermal stability than the NC-composite containing NCs synthesized in monofunctional thiol ligands (CuInS/ZnS-DDT), which has better thermal stability than the NC-composites containing NCs synthesized in state of the art non-reactive monofunctional ligands, i.e. amines (InP/ZnS-OLA; CdSeS/ZnS-OA) and carboxylic acid (CdSe/ZnS-HDA,TOPO). Therefore, the synthesis of NCs in polythiol ligands improves the thermal stability of the NC-composites.

### Example 11

### Evolution of the normalized QY of the NC-composite described in Example 10d (CdS-TEMPIC) in acrylate matrix at three different photon irradiance values

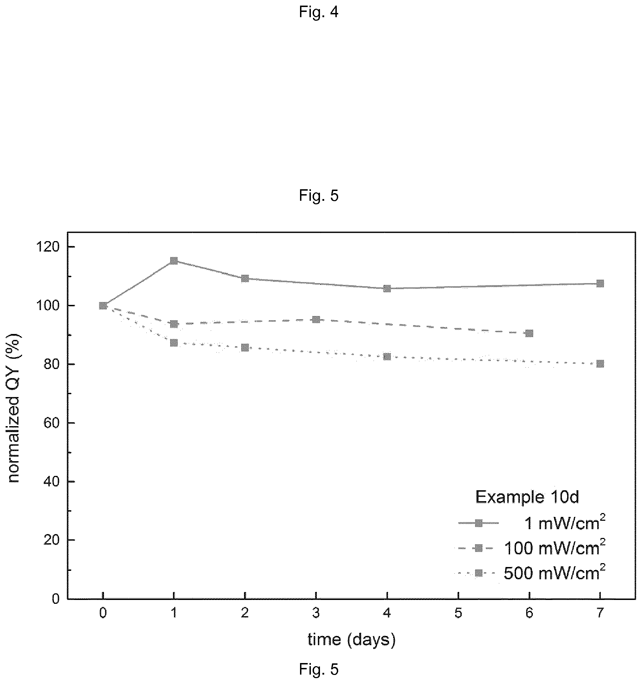

The NC-composite (CdS-TEMPIC) in acrylate matrix as described in the example 10d, was exposed to three different photon irradiances in order to evaluate its photon stability. Three 0.5 cm² pieces of the NC-composite were exposed to 1, 100 and 500 mW/cm². No intentional heat was applied to the NC-composite. The QY of the NC-composites was normalized to its initial QY value. The evolution of the normalized QY under each photon irradiance is shown in figure 5.

The QY of the CdS-TEMPIC NC-composite was completely preserved after 7 days of photon exposure to 1mW/cm². Also, the NC-composite preserved more than 90% of the initial QY under 100 mW/cm² irradiance for 6 days. Finally, after exposing the NC-composite 7 days to 500 mW/cm², it preserved more than 80% of the initial QY.

### Example 12

### InP/ZnS-Pentaerythritol tetrakis (3-mercaptobutylate) (KarenzMT™ PE1) NCs in an Acrylate matrix

0.25 g of (InP/ZnS-KarenzMT™ PE1) (25 wt.%), 0.25 g of KarenzMT™ PE1 (25 wt.%), 0.9 g of Sartomer CN2025 (45 wt.%), 0.1 g of triethylene glycol dimethacryalte (5 wt.%) and 0.05 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Subsequently, the sample was post-cured at 90°C during 2 hours. A reddish emitting semiconductor NC-composite was obtained.

### Synthesis of functionalized NCs:

0.4 g of InCl₃, 0.24 g of ZnCl₂ were dissolved in 8 g Oleylamine. The mixture was heated at 220°C for 10 minutes and 0.5 ml of tris(dimethylamino)phosphine was injected rapidly whereafter 4 minutes later 2.5 gr KarenzMT™ PE1 was injected slowly. The reaction was stirred at 200°C for another 15 minutes. Reddish reactive colloidal semiconductor NCs (InP/ZnS-KarenzMT™ PE1) were obtained.

### Example 13

### CuInS/ZnS-Trimethylolpropane tris(3-mercaptobutyrate) (KarenzMT™ TPMB) NCs in an Acrylate matrix

0.25 g of (CuInS/ZnS-KarenzMT™ TPMB) (25 wt.%), 0.25 g of KarenzMT™ TPMB (25 wt.%), 0.9 g of Sartomer CN2025 (45 wt.%), 0.1 g of triethylene glycol dimethacryalte (5 wt.%) and 0.05 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Subsequently, the sample was post-cured at 90°C during 2 hours. A reddish emitting semiconductor NC-composite was obtained with a QY of 33.8%.

### Synthesis of functionalized NCs:

0.24 g of Cul and 1.46 g of In(OAc)₃ were dissolved in 50 ml KarenzMT™ TPMB. The mixture is heated at 230 °C for 10 minutes. A mixture of 1.7 g of ZnSt₂ in 25 ml KarenzMT™ TPMB was added to the core solution and the mixture is heated at 230 °C for 30 minutes. The mixture was allowed to cool down to RT. Red reactive colloidal semiconductor NCs (CuInS/ZnS-KarenzMT™ TPMB) were obtained.

### Example 14

### CuInS/ZnS-1,3,5-Tris(3-mercaptobutyloxethyl)-1,3,5-triazine-2,4,6-trione (KarenzMT™ NR1) NCs in an Acrylate matrix

0.25 g of (CuInS/ZnS-KarenzMT™ NR1) (25 wt.%), 0.25 g of KarenzMT™ NR1 (25 wt.%), 0.9 g of Sartomer CN2025 (45 wt.%), 0.1 g of triethylene glycol dimethacryalte (5 wt.%) and 0.05 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity during 60 seconds. Subsequently, the sample was post-cured at 90 °C for 2 hours. A reddish emitting semiconductor NC-composite was obtained with a QY of 22.8%.

### Synthesis of functionalized NCs:

0.24 g of Cul and 1.46 g of In(OAc)₃ were dissolved in 50 ml KarenzMT™ NR1. The mixture was heated at 230 °C for 10 minutes. A mixture of 1.7 g of ZnSt₂ in 25 ml KarenzMT™ NR1 was added to the core solution and the mixture is heated at 230 °C for 30 minutes. The mixture was allowed to cool down to RT. Red reactive colloidal semiconductor NCs (CuInS/ZnS-KarenzMT™ NR1) were obtained.

### Example 15

### CuInS/ZnS-1,4-Bis(3-mercaptobutyryloxy)butane (KarenzMT™ BD1) NCs in an Acrylate matrix

0.25 g of (CuInS/ZnS-KarenzMT™ BD1) (25 wt.%), 0.25 g of KarenzMT™ BD1 (25 wt.%), 0.9 g of Sartomer CN2025 (45 wt.%), 0.1 g of triethylene glycol dimethacryalte (5 wt.%) and 0.05 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Afterwards, the sample was post-cured at 90 °C during 2 hours. A reddish emitting semiconductor NC-composite was obtained with a QY of 44.4%.

### Synthesis of functionalized NCs:

0.24 g of Cul and 1.46 g of In(OAc)₃ were dissolved in 50 ml KarenzMT™ BD1. The mixture was heated at 230 °C for 10 minutes. A mixture of 1.7 g of ZnSt₂ in 25 ml KarenzMT™ BD1 was added to the core solution and the mixture was heated at 230 °C for 30 minutes. The mixture was allowed to cool down to RT. Red reactive colloidal semiconductor NCs (CuInS/ZnS-KarenzMT™ BD1) were obtained.

### Example 16

### CuInS/ZnS-Pentaerythritol tetrakis (3-mercaptobutylate) (KarenzMT™ PE1) NCs in an amine acrylate matrix

0.2 g of (CuInS/ZnS-KarenzMT™ PE1) (10 wt.%), 0.8 g of KarenzMT™ PE1 (40 wt.%), 1 g of Genomer 5271 (50 wt.%), and 0.04 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Subsequently, the sample was post-cured at 90 °C during 2 hours.

### Synthesis of functionalized NCs:

0.24 g of Cul and 1.46 g of In(OAc)₃ were dissolved in 50 ml KarenzMT™ PE1. The mixture was heated at 230 °C for 10 minutes. A mixture of 1.7 g of ZnSt₂ in 25 ml KarenzMT™ PE1 was added to the core solution and the mixture was heated at 230 °C for 30 minutes. The mixture was allowed to cool down to RT. Red reactive colloidal semiconductor NCs (CuInS/ZnS-KarenzMT™ PE1) were obtained.

### Example 17

### CuInS/ZnS-Pentaerythritol tetrakis (3-mercaptobutylate) (KarenzMT™ PE1) NCs in a melamine Acrylate matrix

0.2 g of (CuInS/ZnS-KarenzMT™ PE1) (10 wt.%), 0.8 g of KarenzMT™ PE1 (40 wt.%), 1 g of Sartomer CN890 (50 wt.%), and 0.04 g of 2-hydroxy-2-methyl-1-phenyl-propan-1-one (Darocur 1173) (2 phr) were mixed in a conditioning mixer for 2 minutes at 2000 rpm. Subsequently, the mixture is dispensed using a 3 ml plastic pipette into an aluminum cup and photocured by exposing to UV radiation of 120 mW·cm² (UV-A dose) intensity for 60 seconds. Subsequently, the sample was post-cured at 90 °C for 2 hours. A reddish emitting semiconductor NC-composite was obtained.

### Synthesis of functionalized NCs:

0.24 g of Cul and 1.46 g of In(OAc)₃ were dissolved in 50 ml KarenzMT™ PE1. The mixture was heated at 230 °C for 10 minutes. A mixture of 1.7 g of ZnSt₂ in 25 ml KarenzMT™ PE1 was added to the core solution and the mixture was heated at 230 °C for 30 minutes. The mixture was allowed to cool down to RT. Red reactive colloidal semiconductor NCs (CuInS/ZnS-KarenzMT™ PE1) were obtained.

### Example 18

### CuInS/ZnS-Pentaerythritol tetrakis (3-mercaptobutylate) (KarenzMT™ PE1) NCs in a urethane acrylate matrix

0.2 g of (CuInS/ZnS-KarenzMT™ PE1) (10 wt.%), 0.8 g of KarenzMT™ PE1 (40 wt.%), 1 g of Sartomer CN991 (50 wt.%), and 0.04 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Subsequently, the sample was post-cured at 90°C during 2 hours. A reddish emitting semiconductor NC-composite was obtained.

### Synthesis of functionalized NCs:

0.24 g of Cul and 1.46 g of In(OAc)₃ were dissolved in 50 ml KarenzMT™ PE1. The mixture was heated at 230 °C for 10 minutes. A mixture of 1.7 g of ZnSt₂ in 25 ml KarenzMT™ PE1 is added to the core solution and the mixture was heated at 230 °C for 30 minutes. The mixture was allowed to cool down to RT. Red reactive colloidal semiconductor NCs (CuInS/ZnS-KarenzMT™ PE1) were obtained.

### Example 19

### CuInS/ZnS-Pentaerythritol tetrakis (3-mercaptobutylate) (KarenzMT™ PE1) NCs in an amine modified polyether acrylate matrix

0.2 g of (CuInS/ZnS-KarenzMT™ PE1) (10 wt.%), 0.8 g of KarenzMT™ PE1 (40 wt.%), 1 g of amine modified polyether acrylate oligomer (50 wt.%), and 0.04 g of 2-hydroxy-2-methyl-1-phenyl-propan-1-one (Darocur 1173) (2 phr) were mixed in a conditioning mixer for 2 minutes at 2000 rpm. Subsequently, the mixture is dispensed using a 3 ml plastic pipette into an aluminum cup and photocured by exposing to UV radiation of 120 mW·cm² (UV-A dose) intensity for 60 seconds. Subsequently, the sample was post-cured at 90 °C for 2 hours. A reddish emitting semiconductor NC-composite was obtained.

### Synthesis of functionalized NCs:

0.24 g of Cul and 1.46 g of In(OAc)₃ are dissolved in 50 ml KarenzMT™ PE1. The mixture was heated at 230 was added to the core solution and the mixture was heated at 230 °C for 30 minutes. The mixture was allowed to cool down to RT. Red reactive colloidal semiconductor NCs (CuInS/ZnS-KarenzMT™ PE1) were obtained.

### Example 20

### CuInS/ZnS-Pentaerythritol tetrakis (3-mercaptobutylate) (KarenzMT™ PE1) NCs in an acrylamide/diacrylate matrix

0.2 g of (CuInS/ZnS-KarenzMT™ PE1) (6.7 wt.%), 0.8 g of KarenzMT™ PE1 (26.7 wt.%), 1 g of n-(1,1-dimethyl-3-oxobutyl) acrylamide (33.3 wt.%), 1g of 1,6 hexanediol diacrylate (Sartomer SR238) (33.3 wt %) and 0.04 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Subsequently, the sample was post-cured at 90 °C for 2 hours. A reddish emitting semiconductor NC-composite was obtained.

### Synthesis of functionalized NCs:

0.24 g of Cul and 1.46 g of In(OAc)₃ were dissolved in 50 ml KarenzMT™ PE1. The mixture was heated at 230 °C for 10 minutes. A mixture of 1.7 g of ZnSt₂ in 25 ml KarenzMT™ PE1 was added to the core solution and the mixture was heated at 230 °C for 30 minutes. The mixture was allowed to cool down to RT. Red reactive colloidal semiconductor NCs (CuInS/ZnS-KarenzMT™ PE1) were obtained.

### Example 21

### CuInS/ZnS-Pentaerythritol tetrakis (3-mercaptobutylate) (KarenzMT™ PE1) NCs in a bismaleimide matrix

0.2 g of (CuInS/ZnS-KarenzMT™ PE1) (6.7 wt.%), 0.8 g of KarenzMT™ PE1 (26.7 wt.%), 1 g BMI 1500 (33.3 wt.%), 1g of 1,6 hexanediol diacrylate (Sartomer SR238) (33.3 wt %) and 0.04 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity during 60 seconds. Subsequently, the sample was post-cured at 90 °C for 2 hours. A whitish emitting semiconductor NC-composite was obtained.

### Synthesis of functionalized NCs:

0.24 g of Cul and 1.46 g of In(OAc)₃ were dissolved in 50 ml KarenzMT™ PE1. The mixture is heated at 230°C for 10 minutes. A mixture of 1.7 g of ZnSt₂ in 25 ml KarenzMT™ PE1 was added to the core solution and the mixture was heated at 230°C for 30 minutes. The mixture was allowed to cool down to RT. Red reactive colloidal semiconductor NCs (CuInS/ZnS-KarenzMT™ PE1) were obtained.

### Example 22

### CuInS/ZnS-Pentaerythritol tetrakis (3-mercaptobutylate) (KarenzMT™ PE1) NCs in a maleimide/diacrylate matrix

0.2 g of (CuInS/ZnS-KarenzMT™ PE1) (10 wt.%), 0.8 g of KarenzMT™ PE1 (40 wt.%), 0.5 g b-methyl-maleimide (25 wt.%), 0.5 g of 1,6-hexanediol diacrylate (Sartomer SR238) (25 wt %) and 0.04 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Subsequently, the sample was post-cured at 90°C for 2 hours. An orange emitting semiconductor NC-composite was obtained.

### Synthesis of functionalized NCs:

0.24 g of Cul and 1.46 g of In(OAc)₃ were dissolved in 50 ml KarenzMT™ PE1. The mixture was heated at 230 °C for 10 minutes. A mixture of 1.7 g of ZnSt₂ in 25 ml KarenzMT™ PE1 was added to the core solution and the mixture was heated at 230 °C for 30 minutes. The mixture was allowed to cool down to RT. Red reactive colloidal semiconductor NCs (CuInS/ZnS-KarenzMT™ PE1) were obtained.

### Example 23

### CuInS/ZnS-Pentaerythritol tetrakis (3-mercaptobutylate) (KarenzMT™ PE1) NCs in a styrene/divinyl benzene/diacrylate matrix

0.2 g of (CuInS/ZnS-KarenzMT™ PE1) (6.7 wt.%), 0.8 g of KarenzMT™ PE1 (26.7 wt.%), 0.5 g of styrene (16.7 wt. %), 0.5 g of divinyl benzene-styrene (16.7 wt.%), 1g of 1,6-hexanediol diacrylate (Sartomer SR238) (33.3 wt %) and 0.04 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Afterwards, the sample was post-cured at 90 °C for 2 hours. A pinkish emitting semiconductor NC-composite was obtained.

### Functionalized NCs synthesis:

0.24 g of Cul and 1.46 g of In(OAc)₃ were dissolved in 50 ml KarenzMT™ PE1. The mixture was heated at 230 °C for 10 minutes. A mixture of 1.7 g of ZnSt₂ in 25 ml KarenzMT™ PE1 was added to the core solution and the mixture was heated at 230°C for 30 minutes. The mixture was allowed to cool down to RT. Red reactive colloidal semiconductor NCs (CuInS/ZnS-KarenzMT™ PE1) were obtained.

### Example 24

### CuInS/ZnS-Pentaerythritol tetrakis (3-mercaptobutylate) (KarenzMT™ PE1) NCs in a vinyl trimethoxysilane matrix

0.2 g of (CuInS/ZnS-KarenzMT™ PE1) (10 wt.%), 0.8 g of KarenzMT™ PE1 (40 wt.%), 1 g of vinyl trimethoxysilane (50 wt.%), and 0.04 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Afterwards, the sample was post-cured at 90°C for 2 hours. A reddish emitting semiconductor NC-composite was obtained.

### Synthesis of functionalized NCs:

0.24 g of Cul and 1.46 g of In(OAc)₃ were dissolved in 50 ml KarenzMT™ PE1. The mixture was heated at 230 °C for 10 minutes. A mixture of 1.7 g of ZnSt₂ in 25 ml KarenzMT™ PE1 was added to the core solution and the mixture was heated at 230°C for 30 minutes. The mixture was allowed to cool down to RT. Red reactive colloidal semiconductor NCs (CuInS/ZnS-KarenzMT™ PE1) were obtained.

### Example 25

### CuInS/ZnS-Pentaerythritol tetrakis (3-mercaptobutylate) (KarenzMT™ PE1) NCs in a divinyl adipate matrix

0.2 g of (CuInS/ZnS-KarenzMT™ PE1) (10 wt.%), 0.8 g of KarenzMT™ PE1 (40 wt.%), 1 g of divinyl adipate (50 wt.%), and 0.04 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Subsequently, the sample was post-cured at 90 °C for 2 hours. A reddish emitting semiconductor NC-composite was obtained.

### Synthesis of functionalized NCs:

0.24 g of Cul and 1.46 g of In(OAc)₃ are dissolved in 50 ml KarenzMT™ PE1. The mixture was heated at 230 °C for 10 minutes. A mixture of 1.7 g of ZnSt₂ in 25 ml KarenzMT™ PE1 was added to the core solution and the mixture was heated at 230 °C for 30 minutes. The mixture was allowed to cool down to RT. Red reactive colloidal semiconductor NCs (CuInS/ZnS-KarenzMT™ PE1) were obtained.

### Example 26

### CuInS/ZnS-Pentaerythritol tetrakis (3-mercaptobutylate) (KarenzMT™ PE1) NCs in a vinyl ether matrix

0.2 g of (CuInS/ZnS-KarenzMT™ PE1) (10 wt.%), 0.8 g of KarenzMT™ PE1 (40 wt.%) and 1 g of 1,4 cyclohexane dimethanol divinyl ether (50 wt. %) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Subsequently, the sample was post-cured at 90 °C for 2 hours. A reddish emitting semiconductor NC-composite was obtained.

### Synthesis of functionalized NCs:

0.24 g of Cul and 1.46 g of In(OAc)₃ were dissolved in 50 ml KarenzMT™ PE1. The mixture was heated at 230 °C for 10 minutes. A mixture of 1.7 g of ZnSt₂ in 25 ml KarenzMT™ PE1 was added to the core solution and the mixture was heated at 230 °C for 30 minutes. The mixture was allowed to cool down to RT. Red reactive colloidal semiconductor NCs (CuInS/ZnS-KarenzMT™ PE1) were obtained.

### Example 27

### CuInS/ZnS-Pentaerythritol tetrakis (3-mercaptobutylate) (KarenzMT™ PE1) NCs in a biphenyl oxetane matrix

0.2 g of (CuInS/ZnS-KarenzMT™ PE1) (10 wt.%), 0.8 g of KarenzMT™ PE1 (40 wt.%), 1 g of OXBP (50 wt.%), 0.04g of diaryliodonium hexafluoroantimonate (PC2506) (2phr), 0.014 g of isopropylthioxanthone (ITX) (0.7 phr) and 0.01 g of triethylamine (0.5 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Afterwards, the sample was thermally cured at 150°C for 4 hours.

### Synthesis of functionalized NCs:

0.24 g of Cul and 1.46 g of In(OAc)₃ were dissolved in 50 ml KarenzMT™ PE1. The mixture was heated at 230 °C for 10 minutes. A mixture of 1.7 g of ZnSt₂ in 25 ml KarenzMT™ PE1 was added to the core solution and the mixture was heated at 230 °C for 30 minutes. The mixture was allowed to cool down to RT. Red reactive colloidal semiconductor NCs (CuInS/ZnS-KarenzMT™ PE1) were obtained.

### Example 28

### CuInS/ZnS-Pentaerythritol tetrakis (3-mercaptobutylate) (KarenzMT™ PE1) NCs in a bisphenol A/F epoxy matrix

0.2 g of (CuInS/ZnS-KarenzMT™ PE1) (10 wt.%), 0.8 g of KarenzMT™ PE1 (40 wt.%), 1 g of epoxy resin Epikote 232 (50 wt.%), 0.002g of triethylamine (0.1 phr) and 0.02 g of 2-hydroxy-2-methyl-1-phenyl-propan-1-one (Darocur 1173) (1 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Subsequently, the sample was thermally cured at 110°C for 5 hours.

### Synthesis of functionalized NCs:

0.24 g of Cul and 1.46 g of In(OAc)₃ were dissolved in 50 ml KarenzMT™ PE1. The mixture was heated at 230 °C for 10 minutes. A mixture of 1.7 g of ZnSt₂ in 25 ml KarenzMT™ PE1 was added to the core solution and the mixture was heated at 230°C for 30 minutes. The mixture was allowed to cool down to RT. Red reactive colloidal semiconductor NCs (CuInS/ZnS-KarenzMT™ PE1) were obtained.

### Example 29

### CuInS/ZnS-Pentaerythritol tetrakis (3-mercaptobutylate) (KarenzMT™ PE1) NCs in an amine epoxy matrix

0.2 g of (CuInS/ZnS-KarenzMT™ PE1) (10 wt.%), 0.8 g of KarenzMT™ PE1 (40 wt.%), 0.86g of polyethylene glycol diglycidyl ether (43 wt.%), 0.14 g Jeffamine EDR 176 (wt. 7%) and 0.02 g of 2-hydroxy-2-methyl-1-phenyl-propan-1-one (Darocur 1173) (1 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Afterwards, the sample was thermally-cured at 110°C during 5 hours.

### Synthesis of functionalized NCs:

0.24 g of Cul and 1.46 g of In(OAc)₃ are dissolved in 50 ml KarenzMT™ PE1. The mixture was heated at 230 °C for 10 minutes. A mixture of 1.7 g of ZnSt₂ in 25 ml KarenzMT™ PE1 was added to the core solution and the mixture was heated at 230 °C for 30 minutes. The mixture was allowed to cool down to RT. Red reactive colloidal semiconductor NCs (CuInS/ZnS-KarenzMT™ PE1) were obtained.

### Example 30

### CuInS/ZnS-Pentaerythritol tetrakis (3-mercaptobutylate) (KarenzMT™ PE1) NCs in an oxetane methacrylate matrix

0.2 g of (CuInS/ZnS-KarenzMT™ PE1) (10 wt.%), 0.8 g of KarenzMT™ PE1 (40 wt.%), 1 g of OXMA (50 wt.%), 0.04g of diaryliodonium hexafluoroantimonate (PC2506) (2phr), 0.014 g of isopropylthioxanthone (ITX) (0.7 phr) and 0.04 g of 2-hydroxy-2-methyl-1-phenyl-propan-1-one (Darocur 1173) (2 phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Subsequently, the sample was thermally cured at 150°C for 4 hours.

### Synthesis of functionalized NCs:

0.24 g of Cul and 1.46 g of In(OAc)₃ were dissolved in 50 ml KarenzMT™ PE1. The mixture was heated at 230 °C for 10 minutes. A mixture of 1.7 g of ZnSt₂ in 25 ml KarenzMT™ PE1 was added to the core solution and the mixture was heated at 230 °C for 30 minutes. The mixture was allowed to cool down to RT. Red reactive colloidal semiconductor NCs (CuInS/ZnS-KarenzMT™ PE1) were obtained.

### Example 31

### CuInS/ZnS-Pentaerythritol tetrakis (3-mercaptobutylate) (KarenzMT™ PE1) NCs in an isocyanate matrix

0.2 g of (CuInS/ZnS-KarenzMT™ PE1) (10 wt.%), 0.8 g of KarenzMT™ PE1 (40 wt.%), 1 g of Desmodur N330 (50 wt.%) and 0.002 g of triethylamine (0.1phr) were mixed in a conditioning mixer for 2 minutes at 2000 rpm. Subsequently, the mixture was dispensed using a 3 ml plastic pipette into an aluminum cup and photocured by exposing to UV radiation of 120 mW·cm² (UV-A dose) intensity for 60 seconds. Subsequently, the sample was thermally cured at 90 °C for 2 hours. A reddish emitting semiconductor NC-composite was obtained.

### Synthesis of functionalized NCs:

0.24 g of Cul and 1.46 g of In(OAc)₃ were dissolved in 50 ml KarenzMT™ PE1. The mixture was heated at 230 °C for 10 minutes. A mixture of 1.7 g of ZnSt₂ in 25 ml KarenzMT™ PE1 was added to the core solution and the mixture was heated at 230 °C for 30 minutes. The mixture was allowed to cool down to RT. Red reactive colloidal semiconductor NCs (CuInS/ZnS-KarenzMT™ PE1) were obtained.

## Claims

1. A reactive colloidal nanocrystal comprising
a) a core comprising a semiconductive compound, wherein said semiconductive compound is a combination of elements selected from the group consisting of Zn, In, Cu, S and Se; and
b) at least one polythiol ligand selected from the group consisting of primary thiols, secondary thiols and mixtures thereof,
wherein said core is surrounded by at least one polythiol ligand, and wherein said reactive colloidal nanocrystal does not undergo a ligand exchange process, and only the original ligands present during the synthesis are attached.

2. A reactive colloidal nanocrystal according to claim 1, wherein said core comprises a core and at least one monolayer or multilayer shell.

3. The reactive colloidal nanocrystal according to claim 1, wherein said core comprises a core and at least two monolayer and/or multilayer shells.

4. A reactive colloidal nanocrystal according to any one of claims 1 to 3, wherein said semiconductive compound is selected from the group consisting of CulnS, CuInSeS, CuZnlnSeS, CuZnlnS, Cu:ZnlnS, CuInS/ZnS, Cu:ZnlnS/ZnS, and CuInSeS/ZnS.

5. A reactive colloidal nanocrystal according to claim 4, wherein said semiconductive compound is selected from the group consisting of CuInS/ZnS, CuInSeS/ZnS and Cu:ZnlnS/ZnS.

6. A reactive colloidal nanocrystal according to any one of claims 1 to 5, wherein said polythiol ligand has functionality from 2 to 20, preferably from 2 to 10, and more preferably from 2 to 8.

7. A reactive colloidal nanocrystal according to any one of claims 1 to 6, wherein said at least one polythiol ligand is selected from the group consisting of pentaerythritol tetrakis (3-mercaptobutylate), pentaerythritol tetra-3-mercaptopropionate, trimethylolpropane tri(3-mercaptopropionate), tris[2-(3-mercaptopropionyloxy)ethyl]isocyanurate, dipentaerythritol hexakis(3-mercaptopropionate), ethoxylated-trimethylolpropan tri-3-mercaptopropionate, mercapto functional methylalkyl silicone polymer and mixtures thereof.

8. A process to prepare reactive colloidal nanocrystals comprising the step of mixing at least one semiconductive compound and at least one polythiol ligand to form a reactive colloidal nanocrystal, wherein said reactive colloidal nanocrystals do not undergo a ligand exchange process; said semiconductive compound is a combination of elements selected from the group consisting of Zn, In, Cu, S and Se; and said at least one polythiol ligand is selected from the group consisting of primary thiols, secondary thiols and mixtures thereof.

9. A nanocrystal composite comprising
a) reactive colloidal nanocystals according to any one of claims 1 to 7; and
b) a polymer matrix,
wherein said reactive colloidal nanocrystals are covalently linked with said polymer matrix.

10. A nanocrystal composite according to claim 9, wherein said polymer matrix is formed from monomers and/or oligomers selected from the group consisting of acrylates, methacrylates, acrylamides, methacrylamides, maleimides, bismaleimides, alkene containing monomers and/or oligomers, alkyne containing monomers and/or oligomers, vinylether containing monomers and/or oligomers, epoxy containing monomers and/or oligomers, oxetane containing monomers and/or oligomers, aziridine containing monomers and/or oligomers, isocyanates, isothiocyanates and mixtures thereof, preferably said polymer matrix is formed from monomers and/or oligomers selected from the group consisting of acrylates and epoxy containing monomers and/or oligomers and mixtures thereof.

11. A nanocrystal composite according to claim 9 or 10 comprising said reactive colloidal nanocrystals in an amount from 0.01 to 99.99% by weight of the composite, preferably from 10 to 50% by weight, more preferably from 20 to 40% by weight.

12. A nanocrystal composite according to any one of the claims 9 to 11 comprising said polymer matrix in an amount of from 0.01 to 99.99% by weight of the composite, preferably from 50 to 90% by weight, more preferably from 60 to 80% by weight.

13. A process to prepare a nanocrystal composite according to any one of claims 9 to 12 comprising steps of :
1) adding reactive colloidal nanocrystals according to any of claims one 1 to 7;
2) adding monomers and/or oligomers to form the polymer matrix and mixing; and
3) curing with UV light and/or electron beam and/or temperature.

14. A product comprising a nanocrystal composite according to any one of claims 9 to 12, wherein said product is selected from the group consisting of a display device, a light emitting device, a photovoltaic cell, a photodetector, an energy converter device, a laser, a sensor, a thermoelectric device, and a security ink.

15. Use of nanocrystal composite according to any one of claims 9 to 12 as a source of photoluminescence or electroluminescence.

16. Use of nanocrystal composite according to any one of claims 9 to 12 in a product having catalytic or biomedical applications.

## Patentansprüche

1. Reaktives kolloidales Nanokristall, umfassend:
a) einen Kern, der eine halbleitende Verbindung umfasst, wobei die halbleitende Verbindung eine Kombination der Elemente der Gruppe Zn, In, Cu, S und Se ist; und
b) mindestens ein Polythiol-Ligand, das aus der Gruppe ausgewählt ist, bestehend aus primären Thiolen, sekundären Thiolen und Mischungen davon,
wobei der Kern von mindestens einem Polythiol-Ligand umgeben ist und wobei das reaktive kolloidale Nanokristall keinem Ligandenaustauschprozess unterliegt und nur die ursprünglichen Liganden gebunden sind, die während der Synthese vorhanden sind.

2. Reaktives kolloidales Nanokristall nach Anspruch 1, wobei der Kern einen Kern und mindestens eine Einschicht- oder Mehrschichthülle umfasst.

3. Reaktives kolloidales Nanokristall nach Anspruch 1, wobei der Kern einen Kern und mindestens zwei Einschicht- und/oder Mehrschichthüllen umfasst.

4. Reaktives kolloidales Nanokristall nach einem der Ansprüche 1 bis 3, wobei die halbleitende Verbindung aus der Gruppe ausgewählt ist, bestehend aus CulnS, CulnSeS, CuZnInSeS, CuZnInS, Cu:ZnInS, CulnS/ZnS, Cu:ZnInS/ZnS und CuInSeS/ZnS.

5. Reaktives kolloidales Nanokristall nach Anspruch 4, wobei die halbleitende Verbindung aus der Gruppe ausgewählt ist, bestehend aus CulnS/ZnS, CuInSeS/ZnS und Cu:ZnInS/ZnS.

6. Reaktives kolloidales Nanokristall nach einem der Ansprüche 1 bis 5, wobei das Polythiol-Ligand eine Funktionalität von 2 bis 20, vorzugsweise von 2 bis 10 und mehr bevorzugt von 2 bis 8 aufweist.

7. Reaktives kolloidales Nanokristall nach einem der Ansprüche 1 bis 6, wobei wenigstens ein Polythiol-Ligand aus der Gruppe ausgewählt ist, bestehend aus Pentaerythritoltetrakis (3-Mercaptobutylat), Pentaerythritoltetra-3-Mercaptopropionat, Trimethylolpropantri (3-Mercaptopropionat), Tris [2- (3-Mercaptopropionyloxy)ethyl]isocyanurat, Dipentaerythritolhexakis (3-Mercaptopropionat), ethoxylierten Trimethylolpropan tri-3-Mercaptopropionat, Mercaptofunktionelles-Methylalkyl-Silikon-Polymer und Gemische davon.

8. Verfahren zur Herstellung reaktiver kolloidaler Nanokristalle, umfassend den Schritt: Mischen eines reaktives kolloidales Nanokristall, das zumindest ein halbleitende Verbindung und wenigstens ein Polythiol-Ligand umfasst, wobei das reaktiver kolloidaler Nanokristall keinem Ligandenaustauschprozess unterliegt; die halbleitende Verbindung eine Kombination der Elemente ausgewählt aus der Gruppe, bestehend aus: Zn, In, Cu, S und Se; und wenigstens ein Polythiol-Ligand ausgewält ist aus der Gruppe, bestehend aus primären Thiolen, sekundären Thiolen und Mischungen davon.

9. Nanokristallkomposit, umfassend:
a) reaktive kolloidale Nanokristalle nach einem der Ansprüche 1 bis 7; und
b) eine Polymermatrix,
wobei die reaktiven kolloidalen Nanokristalle kovalent mit der Polymermatrix verbunden sind.

10. Nanokristallkomposit nach Anspruch 9, wobei die Polymermatrix aus Monomeren und / oder Oligomeren gebildet ist, die aus der Gruppe ausgewählt sind, die aus Acrylaten, Methacrylaten, Acrylamiden, Methacrylamiden, Maleimiden, Bismaleimiden, Alken enthaltenden Monomeren und / oder Oligomeren, Alkin enthaltenden Monomeren und / oder Oligomere, Vinylether enthaltende Monomere und / oder Oligomere, Epoxy enthaltende Monomere und / oder Oligomere, Oxetan enthaltende Monomere und / oder Oligomere, Aziridin enthaltende Monomere und / oder Oligomere, Isocyanate, Isothiocyanate und Gemische davon besteht, vorzugsweise wird die Polymermatrix aus Monomere und / oder Oligomere gebildet, die aus der Gruppe, bestehend aus Acrylaten und Epoxy-haltigen Monomeren und / oder Oligomeren und Gemischen davon ausgewählt sind.

11. Nanokristallkomposit nach Anspruch 9 oder 10, umfassend die reaktiven kolloidalen Nanokristalle mit einer Gewichtsmenge des Komposits von 0,01 bis 99,99 %, bevorzugt mit einer Gewichtsmenge von 10 bis 50 %, mehr bevorzugter mit einer Gewichtsmenge von 20 bis 40 %.

12. Nanokristallkomposit nach einem der Ansprüche 9 bis 11, umfassend eine Polymermatrix mit einer Gewichtsmenge des Komposits von 0,01 bis 99,99 % des Verbundwerkstoffs, vorzugsweise von einer Gewichtsmenge von 50 bis 90 %, mehr bevorzugter mit einer Gewichtsmenge von 60 bis 80 %.

13. Verfahren zur Herstellung eines Nanokristallkomposits nach einem der Ansprüche 9 bis 12, umfassend die folgenden Schritte:
1) Zugabe von reaktiven kolloidalen Nanokristallen nach einem der Ansprüche 1 bis 7;
2) Zugabe von Monomeren und / oder Oligomeren zur Bildung der Polymermatrix und Mischen; und
3) Aushärten mittels UV-Licht und / oder Elektronenstrahl und / oder Temperatur.

14. Produkt, umfassend ein Nanokristallkomposit nach einem der Ansprüche 9 bis 12, wobei das Produkt ausgewählt ist aus der Gruppe, bestehend aus einer Anzeigevorrichtung, einer Licht emittierenden Vorrichtung, einer Photovoltaikzelle, einem Photodetektor, einer Energiewandlervorrichtung, einem Laser, einem Sensor, ein thermoelektrischen Vorrichtung und einer Sicherheitstinte.

15. Verwendung eines Nanokristallkomposits nach einem der Ansprüche 9 bis 12 als Photolumineszenz- oder Elektrolumineszenzquelle.

16. Verwendung eines Nanokristallkomposits nach einem der Ansprüche 9 bis 12 in einem Produkt für katalytische oder biomedizinische Anwendungen.

## Revendications

1. Nanocristal colloïdal réactif, comprenant
a) un noyau, comprenant un composé semi-conducteur, le composé semi-conducteur étant une combinaison d'éléments choisis dans le groupe consistant en Zn, In, Cu, S et Se ; et
b) au moins un ligand polythiol, choisi dans le groupe consistant en les thiols primaires, les thiols secondaires et leurs mélanges,
le noyau étant entouré d'au moins un ligand polythiol et le nanocristal colloïdal réactif ne subissant pas un processus d'échange de ligand, et seulement les ligands originaux, présents pendant la synthèse, étant fixés.

2. Nanocristal colloïdal réactif suivant la revendication 1, dans lequel le noyau comprend un noyau et au moins une monocouche ou une coquille multicouche.

3. Nanocristal colloïdal réactif suivant la revendication 1, dans lequel le noyau comprend un noyau et au moins deux monocouches et/ou coquilles multicouches.

4. Nanocristal colloïdal réactif suivant l'une quelconque des revendications 1 à 3, dans lequel le composé semi-conducteur est choisi dans le groupe consistant en CuInS, CuInSeS, CuZnInSeS, CuZnInS, Cu:ZnInS, CuInS/ZnS, Cu:ZnInS/ZnS et CuInSeS/ZnS.

5. Nanocristal colloïdal réactif suivant la revendication 4, dans lequel le composé semi-conducteur est choisi dans le groupe consistant en CuInS/ZnS, CuInSeS/ZnS et Cu:ZnInS/ZnS.

6. Nanocristal colloïdal réactif suivant l'une quelconque des revendications 1 à 5, dans lequel le ligand polythiol a une fonctionnalité de 2 à 20, de préférence de 2 à 10, et d'une manière plus préférée de 2 à 8.

7. Nanocristal colloïdal réactif suivant l'une quelconque des revendications 1 à 6, dans lequel le au moins un ligand polythiol est choisi dans le groupe consistant en le tétrakis (3-mercaptobutylate) de pentaérythrite, le tétra-3-mercaptopropionate de pentaérythrite, le tri(3-mercaptopropionate de triméthylolpropane, l'isocyanurate de tris 2-(3-mercaptopropionyloxyl) éthyle, l'hexakis (mercap- topropionate de dipentaérythrite, le tri-3-mercaptopropionate de triméthylolpropane éthoxylé, un polymère de méthylalcoyl silicone mercapto fonctionnel et leurs mélanges.

8. Procédé de préparation de nanocristaux colloïdaux réactifs, comprenant le stade de mélange d'au moins un composé semi-conducteur et d'au moins un ligand polythiol pour former un nanocristal colloïdal réactif, le nanocristal colloïdal réactif ne subissant pas un processus d'échange de ligand ; le composé semi-conducteur est une combinaison d'éléments choisis dans le groupe consistant en Zn, In, Cu, S et Se ; et le au moins ligand polythiol est choisi dans le groupe consistant en les thiols primaires, les thiols secondaires et leurs mélanges.

9. Composite de nanocristal, comprenant
a) des nanocristaux colloïdaux réactifs suivant l'une quelconque des revendications 1 à 7 ; et
b) une matrice polymère,
les nanocristaux colloïdaux réactifs étant liés par covalence à la matrice polymère.

10. Composite de nanocristal suivant la revendication 9, dans lequel la matrice polymère est formée de monomères et/ d'oligomères choisis dans le groupe consistant en des acrylates, des méthacrylates, des acrylamides, des méthacrylamides, des maléimides, des bismaléimides, des monomères et/ou oligomères contenant des alcènes, des monomères et/ou oligomères contenant des alcynes, des monomères et/ou oligomères contenant de l'oxyde vinylique, des monomères et/ou oligomères contenant un époxy, des monomères et/ou oligomères contenant de oxétane, des monomères et/ou oligomères contenant de l'aziridine, des isocyanates, des isothiocyanates et leurs mélanges, de préférence la matrice polymère est formée de monomères et/ou d'oligomères choisis dans le groupe consistant en des acrylates et des monomères et/ou oligomères contenant un époxy et leurs mélanges.

11. Composite de nanocristal suivant la revendication 9 ou 10, comprenant les nanocristaux colloïdaux réactifs en une quantité représentant de 0,01 à 99,99% du poids du composite, de préférence de 10 à 50% du poids, d'une manière plus préférée de 20 à 40% du poids.

12. Composite de nanocristal suivant l'une quelconque des revendications 9 à 11, comprenant la matrice polymère en une quantité représentant de 0,01 à 99,99% du poids du composite, de préférence de 50 à 90% du poids, d'une manière plus préférée de 60 à 80% du poids.

13. Procédé de préparation d'un composite de nanocristal suivant l'une quelconque des revendications 9 à 12, comprenant les stades de :
1) addition de nanocristaux colloïdaux réactifs suivant l'une quelconque des revendications 1 à 7 ;
2) addition de monomères et/ou d'oligomères pour former la matrice polymère et mélange ; et
3) durcissement par la lumière UV et/ou par un faisceau d'électron et/ou par la température.

14. Produit comprenant un composite de nanocristal suivant l'une quelconque des revendications 9 à 12, le produit étant choisi dans le groupe consistant en un dispositif d'affichage, un dispositif émettant de la lumière, une cellule photovoltaïque, un photodétecteur, un dispositif de conversion d'énergie, un laser, un capteur, un dispositif thermoélectrique, et une encre de sécurité.

15. Utilisation d'un composite de nanocristal suivant l'une quelconque des revendications 9 à 12 comme source de photoluminescence ou d'électroluminescence.

16. Utilisation d'un composite de nanocristal suivant l'une quelconque des revendication 9 à 12 dans un produit ayant des application catalytiques ou biomédicales.
